(19) Europäisches Patentamt
European Patent Office
Office européen des brevets

(11) Publication number: 0 359 532 B1

(12) # EUROPEAN PATENT SPECIFICATION

(45) Date of publication of patent specification: **18.10.95**

(51) Int. Cl.[6]: **C09J 7/02**, C08G 18/62, B32B 33/00

(21) Application number: **89309265.0**

(22) Date of filing: **12.09.89**

(54) **Protective overlay film.**

(30) Priority: **15.09.88 US 245124**

(43) Date of publication of application: **21.03.90 Bulletin 90/12**

(45) Publication of the grant of the patent: **18.10.95 Bulletin 95/42**

(84) Designated Contracting States: **DE ES FR GB IT NL SE**

(56) References cited:
**EP-A- 0 196 154**
**FR-A- 2 207 175**

(73) Proprietor: **MINNESOTA MINING AND MANUFACTURING COMPANY**
**3M Center,**
**P.O. Box 33427**
**St. Paul,**
**Minnesota 55133-3427 (US)**

(72) Inventor: **Grunzinger, Raymond E. c/o Minnesota Mining and**
**Manufacturing Company**
**2501 Hudson Road**
**St. Paul**
**Minnesota 55144-1000 (US)**
Inventor: **Leverty, Mark W. c/o Minnesota Mining and**
**Manufacturing Company**
**2501 Hudson Road**
**St. Paul**
**Minnesota 55144-1000 (US)**

(74) Representative: **Baillie, Iain Cameron et al**
**c/o Ladas & Parry**
**Altheimer Eck 2**
**D-80331 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 359 532 B1

## Description

Field of Invention

The present invention relates to a protective overlay film which can be adhered to a desired substrate, e.g., the cover or top film of a retroreflective sheeting, to afford increased solvent-resistance, abrasion-resistance, and weather-resistance.

Background

Retroreflective sheetings are well known and have been widely used for safety and informational purposes, e.g., signs on vehicles or by roads or highways. In order to retain desired retroreflectivity even when wet, retroreflective sheetings typically comprise a cover film disposed in front of the microspheres. As disclosed in U.S. Patent 3,190,178 (McKenzie), such cover films can prevent water from collecting on the front surfaces of the microspheres such that the sheeting will remain retroreflective, even when wet. That patent discloses that such materials as methyl methacrylate, polyethylene terephthalate, cellulose acetate, or cellulose acetate butyrate may be used as cover film materials for such retroreflective sheeting which is sometimes referred to as "encapsulated-lens" sheeting. Other examples of cover film materials include polycarbonate, chlorosulfonated polyethylene, polystyrene, polypropylene, flexible epoxy resins, ethyl cellulose, and the like. In addition, "embedded-lens" retroreflective sheetings wherein the front surfaces of the microspheres are embedded in a top film are made with top films made from such materials as alkyd, acrylic, or plasticized polyvinyl chloride resins.

As are other public signs, retroreflective signs are subject to unauthorized tampering, e.g., application of graffiti by spray paint or other means such as inks or waxes to the surfaces thereof, or attempts by vandals to damage or destroy the sign. Such signs are also subject to abrasive action or being soiled, e.g., by wind blown dirt. Many cover film materials used today, e.g, polymethyl methacrylate, polyvinyl chloride, and polycarbonate, tend to be difficult to clean or resist removal of paint therefrom. In many instances, paints, inks, waxes, or other graffiti materials may adhere tenaciously to the cover film so as to be difficult to remove. In some instances, even if the surface deposit of graffiti material, e.g, the layer of paint, can be removed, some of the components of the material will have penetrated into the cover film so as to remain visible, e.g., as a clouded region of reduced transmissivity or a colored region. Such regions may be merely aesthetically undesirable or may result in reduced retroreflective performance by the sign. Some cover film materials may tend to degrade when subject to environmental conditions, e.g., sunlight, high and low temperatures, humidity.

For these reasons, in some instances a protective film may be provided over the cover film to protect same from degradation due to graffiti and environmental degradative effects.

Many of the protective films in use today are formed from coatings applied in liquid form to the cover film of the retroreflective sheeting to be protected. Examples of such liquid coatings include acrylic urethane-based or acrylic melamine-based compositions. After application, the liquid composition is dried or cured, frequently resulting in evaporation of solvent, thereby forming the protective coating on the sheeting. Evaporation of solvents is typically undesirable and may be strictly regulated or even prohibited because of concerns regarding air and/or water pollution and toxicology. Furthermore, such application techniques may require use of special or expensive equipment such as sprayers or drying ovens and tend to be labor intensive, thereby entailing substantial cost. Moreover, the solvents used in such liquid may tend to attack the cover film, thereby impairing the performance thereof, or the resultant dried or cured coating may not attain sufficiently strong adhesion to the cover film to withstand the stresses and conditions of use.

Other protective films may be applied to the cover film as a preformed sheet. For instance, adhesive-backed polyester or fluoropolymer films may be used as protective overlays. Polyester overlay films typically tend to become brittle and crack and to turn yellow when used in outside applications such as on street signs, and in some instances, may have lower optical transparency than is desired, thereby impairing the retroreflective performance of the sheeting. Furthermore, polyester films typically exhibit high dimensional memory such that when applied to irregular surfaces, e.g., over a surface having a bolt head or rivet thereon, the polyester film tends to recover and pull off the surface around the irregularity. Fluoropolymer overlay films are typically expensive.

U.S. Patent No. 4,090,464 (Bishopp et al.) discloses a vandal guard sheet comprising "a sheet of clear plastic or vinyl type material" which is coated on one side with clear adhesive and is adhered to a sign. According to the reference, the sheet is secured to the underlying retroreflective sheeting with adhesive, and in some embodiments, a frame may be provided which covers the edges of the guard sheet and the

sign to deter unauthorized removal of the guard sheet. The reference teaches that when graffiti is applied to the face of the guard sheet, the sheet is removed and replaced, thereby entailing a continuing cost of materials and labor for installation of new guard sheets.

EP-A-0,196,154 discloses a flat transparent top coat for retroreflective sheeting which comprises a mixture of hydroxy-functional acrylic polyol and aliphatic polyfunctional isocyanate.

## Summary of Invention

The present invention provides a durable, solvent-resistant, abrasion-resistant, and weather-resistant overlay film that may be adhered to the cover film of a retroreflective sheeting, to protect same. The surfaces of overlay films of the invention are more readily cleanable than the surfaces of many cover films currently used on retroreflective sheetings. Importantly, we have found that overlay films of the invention provide excellent resistance to graffiti such that paints, inks, and other typical graffiti materials can typically be easily and substantially completely removed from the surface of the overlay film substantially without degradation to the overlay film or its optical clarity, thereby protecting the underlying cover film and substantially preserving and maintaining the retroreflective properties of the sign of which the overlay film is a part. Furthermore, the overlay films provided herein are typically very durable and weatherable, making them well-suited for use on signs in outdoor or exposed locations.

Briefly summarizing, protective overlay films of the invention are substantially transparent and comprise a durable, solvent-resistant, abrasion-resistant, and weather-resistant protective layer having an inner surface and an outer surface, and an adhesive layer on the inner surface of the protective layer, which is used to adhere the protective layer to the face of the sheeting to be protected, wherein the protective layer is made from a mixture comprising hydroxy-functional acrylic polyol and a polyfunctional curing agent, e.g., one or more of the following: polyfunctional isocyanates, aminoplast resins, azlactones, or a combination of such curing agents, further provided that said protective layer has a modulus at 2 percent elongation of at least 1380 megaPascals.

Overlay films of the invention offer many advantages. They can be easily applied to signs or other substrates without sophisticated equipment, and can be applied in a factory when the retroreflective sheeting is first prepared, in a sign fabrication shop when the sheeting is converted into a sign, or in the field to existing signs. Thus, overlay films of the invention may be conveniently used on new retroreflective sign products or to upgrade or even renovate existing signs. Surface crazing and abrasions on weathered or worn retroreflective signs tend to reduce the retroreflectivity thereof, however, when an overlay film of the invention is applied thereto, these optical flaws can be filled by the adhesive layer with the protective layer providing a new smooth surface, thereby enabling more efficient retroreflection by the sign. Moreover, overlay films of the invention have good optical properties, i.e., they are substantially transparent, typically having a transmittance of 80 percent or more, and can, if desired, be made substantially colorless, such that the retroreflective brightness of a sheeting or sign to which the overlay film is adhered is substantially unhindered while the overlay protects the sheeting as discussed herein. In addition to use on retroreflective sheetings, e.g., encapsulated-lens, embedded-lens, or cube-corner sheetings, overlay films of the invention are also well suited for use on nonreflective signs and other surfaces for which protection from graffiti, dirt, etc. are desired.

## Brief Description of Drawing

The invention will be further explained with reference to the drawing, wherein:

Figure 1 is a schematic cross-section of a portion of an illustrative embodiment of a protective overly film of the invention; and

Figure 2 is a schematic cross-section of a portion of a retroreflective sheeting to the cover film of which a protective overlay film of the invention has been applied.

These figures, which are idealized, are not to scale and are intended to be merely illustrative and nonlimiting.

## Detailed Description of Invention

Figure 1 illustrates in schematic cross-section a portion of typical overlay film 10 of the invention. Overlay film 10 comprises protective layer 12 and adhesive layer 14 on inner surface 13 thereof, and is shown with optional forming carrier 16 on outer surface 11 and optional release liner 18 covering adhesive layer 14. For application, release liner 18 is removed to expose adhesive layer 14 for adherence to the

desired substrate (not shown). Forming carrier 16 is typically used during fabrication of overlay film 10 and may be removed at the completion of such fabrication or may be retained until application of overlay film 10 to a substrate, for instance, to protect overlay film 10 or impart greater dimension stability thereto so as to improve the handling characteristics thereof.

Figure 2 illustrates in schematic cross-section a portion of an encapsulated-lens type retroreflective sheeting 20 to cover film 22 of which overlay film 10 has been adhered. Forming carrier 16 is shown being removed following application of overlay film 10 to sheeting 20. Alternatively (not shown), the forming carrier may be removed prior to application of the overlay film to the sheeting. In some instances, the forming carrier may be removed prior to application to a sign and a premask tape applied in place thereof. Such a premask tape (not shown) may possess substantial body and provide greater adhesion to the protective layer than the adhesion provided by the forming carrier, thereby enabling more convenient handling of the overlay film.

Referring again to Figure 2, the embodiment of retroreflective sheeting shown therein further comprises microspheres 24 having reflectors 26, e.g., aluminum vapor coat, on the rear surfaces thereof and which are partially embedded in binder layer 28. Binder layer 28 is pushed into contact with cover film 22 in a network of intersecting bonds 30 as disclosed in the aforementioned U.S. Patent No. 3,190,178. The backside of binder layer 28 is covered with adhesive layer 32 which is used to adhere retroreflective sheeting 20 to aluminum sign panel 34.

As will be understood, overlay films of the invention may also be used on other types of retroreflective sheeting than the microsphere-based encapsulated-lens sheeting illustrated herein. For example, the overlay films provided herein may be applied to the cover films of embedded-lens type sheetings or retroreflective sheetings having retroreflective elements other than microspheres with reflectors therebehind, e.g., cube-corner retroreflective sheeting. Overlay films of the invention may also be applied to nonreflective signs and other surfaces for which protection is desired.

As discussed above, the protective layer of an overlay film of the invention is made from a mixture of hydroxy-functional acrylic polyol and a polyfunctional curing agent.

Hydroxy-functional acrylic polyols which are useful in the present invention may be made from the following starting materials: 1) esters of methacrylic acid such as methyl methacrylate, 2) an acrylic acid ester, 3) a hydroxy-functional acrylate or methacrylate, or 4) other addition-polymerizable monomer containing a group which can be chemically converted to a hydroxyl group, either before or after incorporation into the acrylic polymer. Typically, combinations of such starting materials will be used. Optionally, the starting materials may also comprise other monomers to desirably modify the properties of the resultant polyol or ultimate protective layer in which the polyol is used. Styrene, vinyl acetate, and acrylic acid are illustrative examples of some of such monomers. The starting materials should be selected such that the resultant polyol has a $T_g$ of between -20°C and 30°C. Polyols having a $T_g$ below this range may tend to form protective layers which are undesirably soft and less abrasion- and mar-resistant, whereas those having a $T_g$ higher than the indicated range may tend to form protective layers which are undesirably brittle. For many applications, polyols having a $T_g$ between -10°C and 20°C are preferred.

The starting materials should be selected such that the hydroxy equivalent weight of the resultant polyol is between 300 and 6,000, preferably between 400 and 3,000. Polyols having substantially lower hydroxy equivalent weight may tend to result in protective layers which are too brittle, whereas those having substantially higher hydroxy equivalent weight may tend to result in protective layers which are too soft. If desired, the polyol component may be a mixture of polyols, some of which have a hydroxy equivalent weight below 300 and others above 6,000, which preferably together have an effective hydroxy equivalent weight between 300 and 6,000, and an effective $T_g$ between -20°C and 30°C. If a mixture of polyols is used, the selected polyols are preferably substantially miscible or soluble with one another so as to optimize the transparency of the resultant product. "Effective hydroxy equivalent weight" is used herein to refer to the overall average hydroxy equivalent weight of the polyol component used in the present invention, whether one or more polyols are used. "Effective $T_g$" is used herein to refer to the overall average $T_g$ of the polyol component used in the present invention, whether one or more polyols are used.

If the hydroxyl content of the polyol is too high, the resultant protective layer may tend to be undesirably hydrophilic so as to become cloudy if in a damp ambient environment for an extended period.

In selecting starting materials for the hydroxy-functional acrylic polyol, an acrylate having at least four carbon atoms in the ester group, such as n-butyl acrylate, is preferred as such acrylates typically tend to impart both toughness and reduced water absorption to the protective layer. To impart desired hardness, the starting materials preferably include methyl or ethyl methacrylate.

To form protective layers of the present invention, one or more polyfunctional curing agents are reacted with the aforedescribed acrylic polyol. Such polyfunctional curing agents may be one or more of the

following: polyfunctional isocyanates, aminoplast resins, azlactones, or a combination of such curing agents.

The effective functionality of the polyfunctional curing agent is preferably between 2 and 20, and more preferably between 2 and 4. "Effective functionality" is used herein to refer to the overall average functionality of the curing agent component used in a protective film of the present invention, whether one or more curing agents are used. Curing agents with increasing functionalities tend to result in increasingly brittle protective layers, such that those curing agents having functionalities above the indicated range may tend to result in protective layers which are undesirably brittle.

Polyisocyanate curing agents which are useful in the present invention include those commonly employed in polyurethane synthesis, among these being aliphatic and cycloaliphatic diisocyanates such as hexamethylene diisocyanate, trimethylhexamethylene diisocyanate, isophorone diiosocyanate and 4,4'-methylenedicyclohexyl diisocyanate; and higher polyisocyanates such as triisocyanate, for example the biuret of 1,6-hexamethylene diisocyanate, commercially available as DESMODUR N from Mobay Chemical Company and having a functionality of about 3. Because isocyanates are typically toxic, those such as 1,6-hexamethylene diisocyanate which may be volatile are preferably partially polymerized with water to form biurets of lower volatility. Other polyisocyanates which are useful for forming the protective overlay film are disclosed in U.S. Patent Nos. 3,846,378 (Griswold); 3,621,000 (Schmelzer et al.); 3,926,875 (Tsugukuni et al.); 3,993,849 (Victorius); 4,046,744 (Jenkins); and 3,694,389 (Levy). Still other useful polyisocyanates are taught by E.N. Doyle in "The Development and Use of Polyurethane Products", McGraw-Hill, Inc. (1971), at pages 93-124. Typically, overlay films of the invention are made with only limited amounts of, and preferably substantially no, aromatic isocyanates as protective layers made with such curing agents typically tend to turn yellow with time and not retain the desired high gloss.

Typically, protective layers of overlay films of the invention which are made with polyfunctional isocyanate curing agents are made with from 0.5 to 1.5 equivalents of such curing agent per about 1.0 equivalent of polyol.

Biurets of very high molecular weight may tend to be less compatible with the polyol, and thus may tend to impair the transparency of the resultant protective layer. Accordingly, when forming biurets, the equivalent weight should not be allowed to rise to the extent that the protective layer may suffer undesirably diminished transparency. For instance, the biuret of 1,6-hexamethylene diisocyanate may tend to be less compatible with the polyol if its equivalent weight exceeds about 200.

Another technique for reducing the volatility of isocyanates is to convert them to isocyanurate trimers. As compared to biurets, the isocyanurate trimers tend to have lower viscosity. A preferred isocyanate is the isocyanurate trimer of 1,6-hexamethylene diisocyanate, described in U.S. Patent No. 4,379,905 (Stemmler et al.) and available as DESMODUR N3300 from Mobay Chemical Company.

Among useful aliphatic polyfunctional isocyanates are cycloaliphatic isocyanates, such as described in U.S. Patent Nos. 4,439,370 (Zengel et al.); 4,338,256 (Fujinami et al.); and 3,912,754 (Findeisen et al.), and isocyanates which function as if they were aliphatic such as isomers of tetramethylxylylenene diisocyanate. Those isomers have aromatic rings which are not bonded directly to the isocyanate group, but are bonded to a hydrogen-free carbon atom, such as described in U.S. Patent Nos. 4,377,530 (Trenbreath et al.); and 4,379,767 (Alexanian et al.). Preferred cycloaliphatic isocyanates include 3-isocyanato-methyl-3,5,5,-trimethyl cyclohexyliso-cyanate produced by Veba-Chemie Company and dicylohexyl-methane-4,4'-diisocyanate available from Mobay Chemical Company as DESMODUR W.

In addition, isocyanate-terminated polyurethane compounds and other isocyanate-functional polymers, such as isocyanate-functional acrylics, may be utilized as curing agents in protective layers of the invention. For instance, acrylic polyols may be thermally cured with one or more isocyanate-functional acrylic curing agents to form a protective layer of the invention. The preparation of isocyanate-functional acrylics is well-known in the art, and is described in U.S. Patent Nos. 4,301,257 (Zengel et al.); 3,929,744 (Wright et al.); and in the Journal of Applied Polymer Science, Vol. 20, pages 3305-3311 (1976). Furthermore, polymers which can, by known reaction techniques, be converted to isocyanate-functional polymers are also usefully employed in the present invention. For example, amine-functional polymers can be converted into isocyanate-functional polymers by the methods described in the Encyclopedia of Chemical Technology, John Wiley and Sons, New York, New York, (1981), Vol. 13, at pages 799-807.

A portion of the isocyanate functionalities of the polymeric starting compound may typically be either blocked, masked, or joined to groups or moieties that can be removed by heating to control the rate of reaction, processability, and pot life of the polyol/curing agent reaction mixture.

Isocyanate blocking agents are well known in the art. For instance, there can be used known blocking agents of the phenol type, lactam type, active methylene type, alcohol type, mercaptan type, acid amide type, imide type, amine type, imidazole type, urea type, carbonate type, imine type, oxime type, or sulfite type. Blocking agents of the phenol type, oxime type, lactam type, and active methylene type are used

especially advantageously. Such blocking agents typically tend to decompose at lower reaction temperatures, thus making the production process more convenient. Furthermore, such blocking agents are typically less volatile, therefore, their release is less likely to cause pin holes or other discontinuities in the resultant protective layer.

Specific illustrative examples of blocking agents which may be utilized in the practice of this invention are as follows:

(a) Phenol type blocking agents:
Phenol, cresol, xylenol, nitrophenol, chlorophenol, ethylphenol, t-butylphenol, hydroxybenzoic acids, hydroxybenzoic acid esters, 2,5-di-tert-butyl-4-hydroxytoluene, etc.
(b) Lactam type blocking agents:
ε-Caprolactam, δ-valerolactam, γ-butyrolactam, β-propiolactam, etc.
(c) Active methylene type blocking agents:
Diethyl malonate, dimethyl malonate, ethyl acetoacetate, methyl acetoacetate, acetylacetone, t-butylacetoacetate, etc.
(d) Alcohol type blocking agents:
Methanol, ethanol, n-propyl alcohol, isopropyl alcohol, n-butyl alcohol, isobutyl alcohol, t-butyl alcohol, n-amyl alcohol, t-amyl alcohol, lauryl alcohol, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, methoxymethanol, glycolic acid, glycolic acid esters, lactic acid, lactic acid esters, methylol urea, methylol melamine, diacetone alcohol, ethylene chlorohydrin, ethylene bromohydrin, 1,3-dichloropropanol, ω-hydroperfluoro-alcohol, acetocyanohydrin, etc.
(e) Mercaptan type blocking agents:
Butylmercaptan, hexylmercaptan, t-butylmercaptan, t-dodecylmercaptan, 2-mercaptobenzothiazole, thiophenol, methylthiophenol, ethylthiophenol, etc.
(f) Acid amide type blocking groups:
Acetoanilide, acetoanisidide, acetotoluide, acrylamide, methacrylamide, acetamide, stearylamide, benzamide, etc.
(g) Imide type blocking agents:
Succinimide, phthalimide, maleimide, etc.
(h) Amine type blocking agents:
Diphenyl amine, phenylnaphthyl amine, xylidine, N-phenylxylidine, carbazole, aniline, naphthyl amine, butyl amine, dibutyl amine, butylphenyl amine, etc.
(i) Imidazole type blocking agents:
Imidazole, 2-ethylimidazole, etc.
(j) Urea type blocking agents:
Urea, thiourea, ethylene urea, ethylene thiourea, 1,3-diphenylurea, etc.
(k) Carbamate type blocking agents:
Phenyl N-phenylcarbamate, 2-oxazolidone, etc.
(l) Imine type blocking agents:
Ethyleneimide, etc.
(m) Oxime type blocking agents:
Formaldoxime, acetaldoxime, acetoxime, methylethylketoxime, diactyl monoxime, benzophenone oxime, cyclohexanone oxime, etc.
(n) Sulfite type blocking agents:
Sodium bisulfite, potassium bisulfite, etc.

Additional isocyanate blocking agents are taught by Doyle in "The Development and Use of Polyurethane Products", supra.

Preferred blocking agents for making durable, protective layers are oxime type or active methylene type blocking agents. The most preferred blocking agents are 2-butanoxime, also commonly known as methyl ethyl ketoxime, acetoxime, and diethyl malonate which are believed to offer an optimum combination of low decomposition temperature and high transparency of final product.

As an alternative to employing well-known blocking agents to block the isocyanate functionality of the polymer, polymeric materials may be utilized which inherently contain masked isocyanate functionalities, which can be unmasked by heating. For example, cyclic nitrile adducts containing two or more cyclic nitrile-functional groups enter into a ring-opening addition reaction in the presence of heat and crosslinking agents to result in cured polymers containing urethane and/or urea linkages. The preparation of cyclic nitrile adducts is described in U.S. Patent Nos. 3,531,425 (Burk et al.); 3,652,507 (Burk et al.); 3,702,320 (Fritok et al.); and 4,049,007 (Russell et al.).

Additionally, it is preferred that a typical urethane synthesis catalyst be used when reacting a polyfunctional isocyanate curing agent and polyol to yield the protective layer. Exemplary catalysts are disclosed by Doyle in "The Development and Use of Polyurethane Products", supra. Examples of catalysts which are typically useful include dibutyl tin dilaurate, stannous octoate, zinc naphthenate, and zinc-2-ethylhexanoate.

Another class of useful polyfunctional curing agents are polyfunctional aminoplast resins, i.e., amine-aldehydes, such as urea formaldehydes and melamine formaldehydes. Urea formaldehydes are less preferred because they typically provide less durable protective layers.

Examples of useful melamine resins include those having the formula:

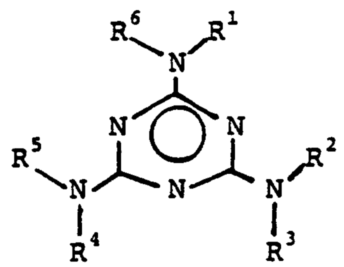

Formula I

wherein $R^1$-$R^6$ may independently be a hydrogen, or a radical of the formula $-CH_2OP$, wherein P is a hydrogen or an alkyl, preferably containing less than five carbon atoms. Preferably at least two of $R^1$-$R^6$ are such a radical in order to provide good cross-linking properties. However, it is usually preferred that in each adjacent pair of functional groups, i.e., $R^1$ and $R^2$, $R^3$ and $R^4$, or $R^5$ and $R^6$, which are bonded to the same nitrogen atom, that only one of the R functionalities, i.e., $R^1$ or $R^2$, be such a radical and that the other R functionality be a hydrogen. Such curing agents are believed to provide faster curing reactions.

Partially or fully methylated melamine resins are typically preferred aminoplast curing agents as they typically react with polyols at relatively lower reaction temperatures and provide fast cure under such conditions. Furthermore, such curing agents typically generate low amounts of volatile reaction byproducts per unit mass during cure, thereby reducing the potential for formation of pinholes in the resultant protective layer.

A related class of useful curing agents are glycourils having the formula:

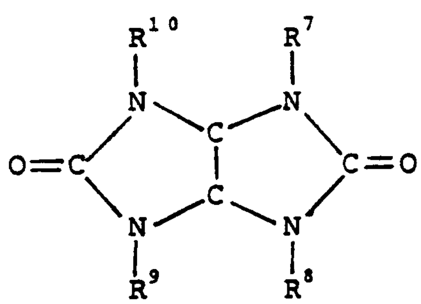

Formula II

wherein $R^7$-$R^{10}$ may independently be a hydrogen, or a radical of the formula $-CH_2OP$, wherein P is a hydrogen or an alkyl, preferably containing less than five carbon atoms. Preferably at least two of $R^7$-$R^{10}$ are such a radical in order to provide good cross-linking properties.

When using aminoplast curing agents, the reaction mixture of polyol and curing agent preferably contains between 10 and 50, and more preferably between 20 and 30, weight percent of curing agent.

When aminoplast curing agents are used to make a protective layer of the present invention, it will typically be desirable to use an acidic catalyst to speed the reaction mechanism. Examples of useful catalyst include organic phosphoric acids and organic sulphonic acids.

Another class of useful polyfunctional curing agents are multifunctional azlactones. U.S. Patent No. 4,485,236 (Rasmussen et al.) discloses examples of azlactones useful as curing agents in the present invention having the formula:

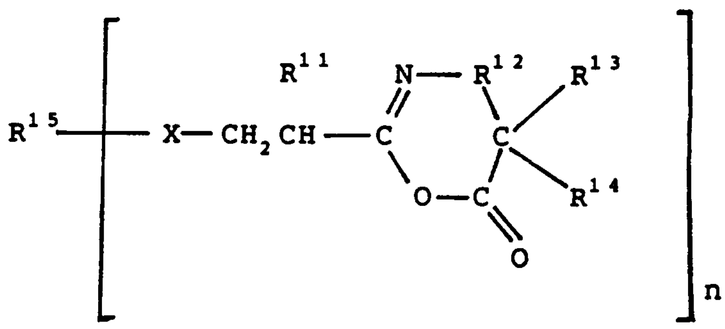

Formula III

wherein

$R^{11}$ is hydrogen, chlorine or a methyl group;

$R^{12}$ is a single bond or a methylene or ethylene group, the last two of which can be substituted by alkyl groups having from 1 to 6 carbon atoms or phenyl groups;

$R^{13}$ and $R^{14}$ are independently an alkyl or cycloalkyl group having from 1 to 12 carbon atoms, an aryl or aralkyl group having from 6 to 12 carbon atoms, or $R^{13}$ and $R^{14}$ taken together with the carbon atom to which they are bonded form a 5- to 12-membered carbocyclic ring;

X is a nucleophilic group selected from

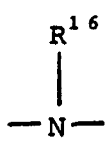

and -S-,

in which $R^{16}$ is a hydrocarbyl group selected from (1) an alkyl or cycloalkyl group having from 1 to 18 carbon atoms, or (2) an aryl or aralkyl group having from 6 to 12 carbon atoms, $R^{16}$ may optionally be substituted with at least one cyano or halo;

$R^{15}$ is a mono or polyvalent organic group that has a valence of n and is the residue of a nucleophilic group-substituted compound, $(HX)_nR^{15}$, in which X is defined above, the residue having a molecular weight up to 20,000, preferably selected from mono- and polyvalent hydrocarbyl (i.e., aliphatic and aryl compounds having 2 to 20 carbon atoms and optionally one to four catenary heteroatoms of oxygen, nitrogen or sulfur, e.g., piperazine, furan, thiophene), polyoxyalkylene, polyester, polyolefin, polyacrylate, and polysiloxane residues that can optionally all be further substituted by at least one non-nucleophilic group such as cyano, halo, ester, ether, keto, nitro, silyl, sulfide (the carbon-containing groups having up to 10 carbon atoms), and nucleophilic groups including secondary amino groups, hydroxyl groups or mercapto groups; and

n is an integer having a value of 2 to 20.

Optionally, $R^{13}$, $R^{14}$, and $R^{16}$ can be hydrocarbons or they can be substituted by any group that does not react with the azlactone ring, such as cyano, halo, ester, alkoxy, keto, nitro silyl, and sulfide (the carbon-containing groups having up to 10 carbon atoms).

When such curing agents are used in the present invention, it will typically be desirable to use a catalyst such that the polyol/curing agent reaction mixture will cure at a useful rate at a moderately elevated temperature or, in some instances, even at room temperature. Preferred catalysts for use with such curing agents include Bronsted and Lewis acid catalysts, however, weakly basic catalysts such as triethylamine, pyridine, 4-dimethylaminopyridine, and diazabicyclooctane, and strongly basic catalysts such as tetrabutylammonium hydroxide, alkali metal hydroxides, and alkali metal alkoxides may also be used.

Typically, protective layers of overlay films of the invention which are made with polyfunctional azlactone curing agents are made with from 0.5 to 1.5 equivalents of such curing agent per 1.0 equivalent of polyol.

We have observed, particularly in the case of protective layers made with polyfunctional isocyanate curing agents such as described herein, that protective layers having higher modulus tend to also have higher stain resistance. Accordingly, in order to provide high stain resistance, the protective layer of an overlay film of the invention should have a modulus at 2 percent elongation of at least 1380 megaPascals (200,000 pounds/inch$^2$), and preferably at least 1900 megapascals (275,000 pound/inch$^2$).

The protective layer preferably does not soften substantially at temperatures below 50 °C, or more preferably below 100 °C. Protective layers which soften at Substantially lower temperatures may tend to be less resistant to penetration by solvents or dirt, and thus may, when defaced, tend to form ghosts that are difficult to clean.

In some instances, protective layers made with isocyanate curing agents may contain styrene in the acrylic polyol. It is believed, based upon the discussion in D. R. Bauer and R. A. Dickie, "Cure and Photodegradation of Two-Package Acrylic/Urethane Coatings", p. 289, Ind. Eng. Chem. Prod. Res. Dev., Vol. 25, No. 2, 1986, that incorporation of limited amounts of styrene in the polyol may improve the resistance of the resultant protective layer to photodegradation, thereby improving the weatherability of same. Limited amounts of styrene may also improve the cleanability of such protective layers. However, increasing amounts of styrene in the polyol will typically result in a substantially more brittle protective layer. Accordingly, the styrene content is preferably no more than 50 weight percent of the polyol. In most instances where the protective layer is made with a melamine resin curing agent, the protective layer is preferably substantially free of styrene as styrene may tend to reduce the weatherability of the resultant protective layer as evidenced by a substantial decrease in 60° gloss retention.

If desired, the protective layer may contain limited amounts of other monomers copolymerized in the polyol to alter the properties of the resultant protective layer. For instance, acrylic acid or vinyl acetate may be incorporated in the polyol to improve the adhesion between the resultant protective layer and the adhesive layer of overlay films of the invention. Such monomers also typically tend to increase the softening point of the protective layer when incorporated therein. Higher levels of such monomers may tend to increase the hydrophilicity of the protective layer to such an extent that the protective layer may tend to absorb moisture and become foggy under damp or wet environmental conditions. Accordingly, the polyol typically comprises no more than 10 weight percent of such monomers.

If desired, the protective layer may contain a coloring agent, preferably substantially transparent such as a dye, to impart desired color to the overlay film. Protective layers of the invention may also comprise one or more of the following other additives: processing aids (e.g., viscosity controlling agents, etc.), ultraviolet stabilizers, antioxidants, flow agents, leveling agents, etc.

Protective layers of overlay films of the invention are typically made by casting or extruding an uncured composition upon a forming carrier and then curing the composition thereon. Examples of materials from which forming carriers may be made include polyester terephthalate, polypropylene, ethylene/acrylic acid films, and coated papers. The forming carrier provides a smooth surface upon which to form the protective layer, and may be used to protect the protective layer during fabrication, storage, or application of the overlay film as discussed with respect to Figure 1 above. If desired, the forming carrier may be removed and a premask tape or sheet applied in place thereof to facilitate handling and application of the overlay film.

Because the outer surface of the protective layer is in contact with the forming carrier as the protective layer is formed, and accordingly tends to assume the surface features of the carrier, the surface of the forming carrier is preferably very smooth. The forming carrier is preferably sufficiently smooth that the outer surface of the protective layer has a 60° gloss at least 60, and more preferably at least 90, such that the overlay film will have high optical transmittance. In addition, the carrier should release from the protective layer when desired. Accordingly, depending upon the characteristics of the carrier material and the protective layer, in many instances it may be desired to apply a release agent or release treatment to the surface of the carrier. For example, in some instances, a silicone release agent may be applied to the carrier prior to forming of the protective layer thereon.

In some instances, the forming carrier may also be selected with sufficient weight and thickness so as to impart sufficient body to make handling the overlay film easier. It may be preferred, however, to replace the forming carrier with a premask sheet or tape as described above. A premask tape can be optimized for desired adhesion to the protective layer and handling characteristics whereas the forming carrier is typically chosen for maximum smoothness and desired release characteristics.

Protective layers of overlay films of the invention are typically between 25 to 125 µm (1-5 mils) thick, with layers from 50.8 to 76.2 µm (2-3 mils) thick typically being preferred. In some embodiments, however, overlay films may be made with protective layers having thicknesses outside these ranges in accordance with the invention. Thicker protective layers cost more and may tend to be slightly less transmissive. Protective layers substantially thinner than the indicated range are typically harder to handle and apply because they are too flimsy and, at very low thicknesses, may tend to have minute pin holes from casting or formation defects or provide insufficient protection to the cover film under mechanical stress. Protective layers between 50.8 to 76.2 µm (2 and 3 mils) thick typically provide an optimum combination of handling and performance characteristics.

Following formation of the protective layer upon the forming carrier, an adhesive layer is applied, e.g., coated or laminated, to the inner surface of the protective layer. The adhesive should be substantially transparent such that it will not interfere with desired retroreflection by the underlying retroreflective sheeting. If desired, the adhesive layer may contain a coloring agent, preferably substantially transparent such as a dye, to impart desired color to the overlay film.

The adhesive must provide desired adhesion to both the protective layer of the overlay film and the cover films to which overlay films of the invention are adhered. Typically, sufficient adhesion should be provided so as to resist any tendency of the protective layer to tent over surface irregularities in the cover film of the underlying retroreflective sheeting and to hinder attempts by vandals to delaminate the sheeting from the underlying cover film. In many instances, it will be preferred that the strength of the bonds of the adhesive to the inner surface of the protective layer and to the substrate to which the overlay film is applied exceed the breaking strength of the protective layer. Thus, when removal of the protective layer from a sign is attempted by a vandal, the protective layer will break into small pieces rather than permit its removal in one sheet. Furthermore, the adhesive preferably substantially retains its desired properties for the intended life of the application under probable temperature, ultraviolet radiation exposure, humidity, and other conditions.

The adhesive layer should be thick enough to provide an essentially continuous coating over the entire portion of the protective layer covering the sheeting to which the overlay film is being applied, and should be kept thin enough to reduce the overall thickness of the overlay film and costs therefor. Typically, adhesive layers having thicknesses between 10 and 25 micrometers will provide the optimum combination of sufficient thickness to cover dust particles and minor surface defects in either the inner surface of the protective layer or the surface of the substrate to which the overlay film is to be adhered, and minimum thickness to reduce costs, prevent excess adhesive from oozing from rolls of overlay film, and decrease any tendency of the adhesive to reduce the transmittance of the overlay film.

Typically, adhesives used in the invention will be pressure-sensitive, however, activated adhesives, e.g., heat- or microwave-activated adhesives, may be used in some embodiments. In the latter instances, the adhesive should be activatable under conditions which will not undesirably degrade the protective layer of the overlay film or the cover film or other elements of the retroreflective sheeting to which the overlay film is being applied.

Depending upon the characteristics of the adhesive and the protective layer, it may be desired to prime the inner surface of the protective layer to ensure strong adhesion therebetween. Such prime, which may comprise a surface treatment or application of a priming material, should not substantially reduce the overall transmissivity of the overlay film.

Examples of pressure-sensitive adhesives which are useful in overlay films of the invention include isooctyl acrylate/acrylic acid copolymers (e.g., in a 96/4 weight ratio) and urethane pressure-sensitive adhesives. U.S. Patent No. Re. 24,906 (Ulrich) discloses several pressure-sensitive adhesives which, if made in transparent form, would be useful for protective overlay films of the present invention. U.S. Patent No. 4,199,646 (Hori et al.) discloses a heat-activated, pressure-sensitive adhesive which may be used in accordance with the present invention.

Typically, the adhesive layer will be covered with a release liner, e.g., a polymeric or paper film, as shown in Figure 1. In addition to covering the adhesive layer until the overlay film is applied to a sign, release liners may be coded, e.g., by color or with printed symbols or information, to facilitate classification of different embodiments of the overlay film of the invention.

In most instances, depending upon their thickness and flexibility, overlay films of the invention may be cut, e.g., die cut, into sheet form or wound into roll form for storage and transport prior to use without cracking or chipping.

We have discovered that the protective layers described herein are solvent-resistant, abrasion-resistant, and weather-resistant such that overlay films made using same are durable and provide effective protection to underlying retroreflective sheetings. Moreover, such overlay films, which are substantially transparent, are sufficiently hard to resist gouging or penetration such as by dirt and grit particles, etc., and yet are sufficiently conformable, i.e., flexible and extensible, that they may be adhered over irregular surfaces, e.g., corrugated or riveted panels. Furthermore, the overlay films of the invention typically exhibit sufficiently low dimensional memory that, after being shaped into a desired profile over an irregular surface, they will substantially retain the profile without tending to recover and pop off or tent, for instance, when applied over a portion of a sheeting having a bolt head or rivet protruding therefrom.

The protective layers described herein provide excellent graffiti-resistance because they are resistant to solvent or ink attack. Accordingly, graffiti materials such as paints and inks applied thereto can typically be easily removed from the surface of the protective layer. Moreover, because paints and inks typically do not

penetrate into the protective layer, no loss in optical properties such as clouding or coloring of the layer is suffered.

## Examples

The invention will now be further explained with the following illustrative examples which are nonlimiting. Unless otherwise indicated, all amounts are expressed in parts by weight.

The following test methods and procedures were used unless otherwise indicated.

### Transmittance

Transmittance was determined according to ASTM D1746-70.

### Solvent-Resistance

Solvent-resistance was evaluated by individually adhering samples of the subject protective layers to 6.9 cm by 27.9 cm (2.75 inch by 11 inch) aluminum panels and then depositing three drops of the indicated solvent to the surface of each with a 1 millilitre eyedropper. Following application of the solvent, an inverted watchglass was placed over the deposited solvent to slow evaporation thereof. The time until swelling, wrinkling, or hazing of the subject polymer was visible to the unaided eye was measured.

### Tensile Strength, Elongation, and Modulus

Tensile strength, elongation, and modulus properties of protective overlay films were determined according to ASTM D882-67 using a subject protective layer with no adhesive thereon.

### Abrasion-Resistance

Abrasion-resistance was evaluated by individually adhering samples of the subject protective layers to a 6.9 cm by 27.9 cm (2.75 inch by 11 inch) aluminum panel, double rubbing each by hand with a new 5.08 cm (2 inch) square piece of 000 steel wool for 50 reciprocal strokes (i.e. a single stroke being a rub in a first direction and a rub in the return direction) of equal pressure, and then wiping clean with a slightly dampened clean rag. Each sample was tested prior to and following the double rubbing for 60° gloss according to ASTM D2451-70. The percent gloss retention was determined as a measure of abrasion-resistance.

### Gloss

Gloss was determined according to ASTM D2457-70.

### Weather-Resistance

Weather-resistance was evaluated by measuring the 60o gloss according to ASTM D2457-70 before and after the indicated duration of accelerated weathering according to ASTM G23-81, Type E, Method 1. The percent gloss retention was determined as a measure of weather-resistance.

### Stain-Resistance

Stain-resistance was evaluated by individually adhering samples of subject protective layers to 6.9 cm by 27.9 cm (2.75 inch by 11 inch) aluminum panels and then uniformly defacing the samples with a blue Sanford SHARPIE Brand Permanent Marker. After application of the ink, the samples were allowed to sit at room temperature for about 1 hour, and then cleaned by double rubbing using uniformly folded paper towels which had been wet with methyl ethyl ketone. Stain-resistance was evaluated by counting the number of double rubs required to clean the surface of the sample and then subjectively assessing the appearance of the sample according to the following grades:

| Grade | Performance |
|---|---|
| 1 | Excellent removability, no ghosting or staining. |
| 2 | Removable, some ghosting or staining. |
| 3 | Poor removability. |
| 4 | No removability, protective layer degraded. |

Examples 1-3 and Comparative Examples A and B

In Examples 1-3 and Comparative Examples A and B, protective layers were made as follows. A reaction mixture of the indicated polyol and aliphatic polyfunctional isocyanate was coated on a paper web which had been surface treated to provide good release properties and then passed through an oven at about 150°C for about 10 minutes to cure the protective layer. The final thickness of the protective layer was about 2 mils (50 microns). A highly tacky, acrylic pressure-sensitive adhesive was coated on the exposed surface of the protective layer to about 25 µm (microns) thickness, and then the adhesive was dried by passing through an oven at about 150°C for about 1 minute following which a silicone-treated release liner was applied over the exposed surface of the adhesive.

The polyols used had the following compositions and properties;

| Component | Polyol A | Polyol B |
|---|---|---|
| Methyl methacrylate | 22.0 | 45.3 |
| Butyl acrylate | 30.0 | 41.0 |
| Hydroxyethyl acrylate | 27.0 | 0.0 |
| Hydroxypropyl acrylate | 0.0 | 13.7 |
| Styrene | 21.9 | 0.0 |
| Property | | |
| $T_g$ | 20 | -2 |
| Equivalent Weight | 600 | 950 |

In Examples 1-3 and Comparative Examples A and B, the polyol/curing agent reaction mixtures had the following compositions (expressed in equivalents):

| Component | Examples | | | | |
|---|---|---|---|---|---|
| | 1 | 2 | 3 | A | B |
| Polyol A | 1.0 | 1.0 | 1.0 | 1.0 | 1.0 |
| Polyol B | 0.5 | 0.75 | 1.0 | 3.0 | 2.0 |
| Isocyanate | 1.5 | 1.75 | 2.0 | 4.0 | 3.0 |

In Examples 1-3, the isocyanate curing agent was DESMODUR N3390, tris (6-isocyanatohexamethylene) isocyanurate having an equivalent weight of about 210. In Comparative Examples A and B, the isocyanate curing agent was DESMODUR N3200, biuret of 1,6 hexamethylene diisocyanate having an equivalent weight of about 186.

Comparative Examples C-E

Protective overlay films were prepared in Comparative Examples C-E as in Examples 1-3, except the indicated materials were used as the protective layer.

| Example | Material |
|---|---|
| C | Polyvinyl fluoride film - about 1 mil (25 microns) thick, commercially available from E.I. DuPont de Nemours and Co., as TEDLAR. |
| D | Polyester terephthalate film - biaxially orientated, about 2 mils (50 microns) thick. |
| E | Polymethylmethacrylate film - extrusion cast and biaxially orientated, about 3.0 mils (75 microns) thick. |

In Comparative Example E, after coating on the protective layer, the adhesive was allowed to dry at room temperature instead of being oven dried because of the oriented nature of the film.

The results ofthe protective layers produced in Examples 1-3 and Comparative Examples A-E are tabulated in Table I.

TABLE I

| Ex. | Tensile Str.[1] | Elong.[2] | Abrasion Resis.[3] | Transm.[4] | Solvent Resis.[5] | Stain-Resist. Rubs | Stain-Resist. Value | Modulus[6] | Weather Resis.[7] |
|---|---|---|---|---|---|---|---|---|---|
| 1 | 50 | 6 | 37 | 87 | 120 | 7 | 1 | 2300 | 100 |
| 2 | 43 | 7 | 43 | 86 | 100 | 9 | 1 | 1880 | 98 |
| 3 | 39 | 8 | 64 | 82 | 100 | 9 | 1 | 1500 | 96 |
| A | 11 | 87 | 28 | 81 | 20 | 40 | 2 | 300 | 90[8] |
| B | 9.7 | 65 | 33 | 81 | 30 | 40 | 2 | 510 | 88 |
| C | 210 | 186 | 72 | 79 | >180 | 8 | 1 | NA | 96 |
| D | 174 | 126 | 50 | 77 | >180 | 10 | 1 | NA | 98[9] |
| E | 26 | 4 | 22 | 85 | 60 | 11 | 4 | NA | 85[8] |

1 Tensile Strength in megaPascals
2 Elongation in Percent
3 Abrasion Resistance in Percent gloss retained
4 Transmittance in Percent
5 Solvent Resistance in Seconds
6 At 2 percent elongation, in megaPascals
7 Weather-resistance as percent gloss retained, after 1000 hours accelerated weathering unless otherwise indicated
8 After 2000 hours accelerated weathering
9 After 3000 hours accelerated weathering

## Claims

**1.** A substantially transparent protective overlay film characterized in that said film comprises a solvent-resistant, abrasion-resistant, and weather-resistant protective layer having an inner surface and an outer

surface, and an adhesive layer on said inner surface of said protective layer, wherein said protective layer has a modulus at 2 percent elongation of at least 1380 megaPascals and is made from a mixture of at least one hydroxy-functional acrylic polyol and at least one polyfunctional curing agent.

**2.** The overlay film of claim 1 further characterized in that said acrylic polyol is made from at least one of the following:
a) ester of methacrylic acid,
b) ester of acrylic acid,
c) hydroxy-functional acrylate or methacrylate, or
d) an addition-polymerizable monomer containing a group which can be chemically converted to a hydroxyl group.

**3.** The overlay film of any preceding claim further characterized in at least one of the following:
a) the effective $T_g$ of said polyol is between -20 °C and 30 °C; or
b) the effective equivalent weight of the polyol is between 300 and 6,000.

**4.** The overlay film of any one of claims 1-2 further characterized in at least one of the following:
a) the effective $T_g$ of said polyol is between -10 °C and 20 °C; or
b) the effective weight of the polyol is between 400 and 3,000.

**5.** The overlay film of any one of claims 1-4 further characterized in that the starting materials of said polyol comprise at least one of the following:
a) at least in part an acrylate having at least four carbon atoms in the ester group; or
b) one or more vinyl monomers.

**6.** The overlay film of any one of claims 1-5 further characterized in at least one of the following:
a) said polyfunctional curing agent comprises at least one of the following: polyfunctional isocyanate, aminoplast resin, azlactone, or a combination thereof;
b) the effective functionality of said curing agent is between 2 and 20; or
c) the effective functionality of said curing agent is between 2 and 4.

**7.** The overlay film of claim 6 further characterized in that said film comprises a polyfunctional isocyanate curing agent wherein said curing agent comprises one or more of the following: aliphatic diisocyanate, cycloaliphatic diisocyanate, or triisocyanate.

**8.** The overlay film of claim 6 further characterized in that said film comprises a polyfunctional isocyanate wherein a portion of the isocyanate functionalities of said isocyanate have blocking groups or masking groups.

**9.** The overlay film of claim 8 further characterized in that said film comprises blocking groups of one or more of the following types: phenol type, lactam type, active methylene type, alcohol type, mercaptan type, acid amide type, imide type, amine type, imidazole type, urea type, carbonate type, imine type, oxime type, or sulfite type.

**10.** The overlay film of claim 9 further characterized in that said blocking groups comprise one or more of the following: 2-butanoxime, acetoxime, or diethyl malonate.

**11.** The overlay film of claim 10 further characterized in that the ratio of equivalents of blocking agent to equivalents of isocyanate is between 0.7 and 1.5.

**12.** The overlay film of claim 6 further characterized in that said film comprises a polyfunctional isocyanate wherein said isocyanate has been converted to a biuret.

**13.** The overlay film of claim 12 further characterized in that said biuret is the biuret of 1,6-hexamethylene diisocyanate.

**14.** The overlay film of claim 13 further characterized in that the equivalent weight of said biuret when mixed with said polyol is less than about 200.

**15.** The overlay film of claim 6 further characterized in that said curing agent comprises an isocyanate which has been converted to isocyanurate trimers.

**16.** The overlay film of any one of claims 6-15 further characterized in that said protective layer comprises from 0.5 to 1.5 equivalents of said isocyanate per 1.0 equivalent of said polyol.

**17.** The overlay film of any one of any preceding claim further characterized in that said film comprises a curing agent having the formula:

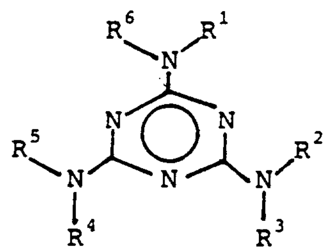

Formula I

wherein $R^1$-$R^6$ are independently a hydrogen, or a radical of the formula $-CH_2OP$, wherein P is a hydrogen or an alkyl.

**18.** The overlay film of claim 17 further characterized in that said curing agent is partially or fully methylated.

**19.** The overlay film of any preceding claim further characterized in that said film comprises a curing agent having the formula:

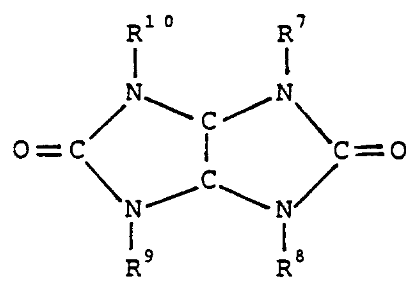

Formula II

wherein $R^7$-$R^{10}$ are independently a hydrogen, or a radical of the formula $-CH_2OP$, wherein P is a hydrogen or an alkyl.

**20.** The overlay film of any preceding claim further characterized in that said film comprises a curing agent having the formula:

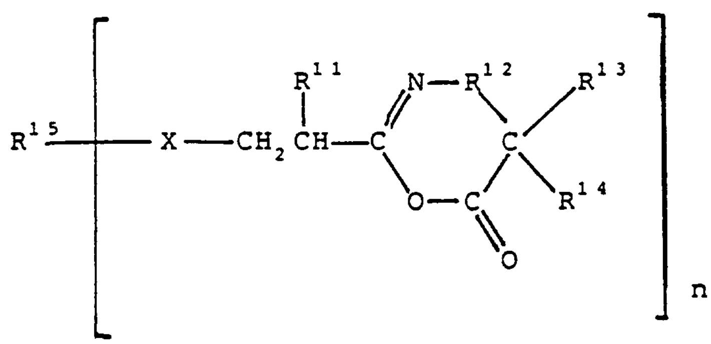

Formula III

wherein

$R^{11}$ is a hydrogen, chlorine, or methyl group;

$R^{12}$ is a single bond or a methylene or ethylene group, the last two of which can be substituted by alkyl groups having from 1 to 6 carbon atoms or phenyl groups;

$R^{13}$ and $R^{14}$ are independently an alkyl or cycloalkyl group having from 1 to 12 carbon atoms, an aryl or aralkyl group having from 6 to 12 carbon atoms, or $R^{13}$ and $R^{14}$ taken together with the carbon atom to which they are bonded form a 5- to 12-membered carbocyclic ring;

X is a nucleophilic group selected from

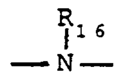

and -S-,

in which $R^{16}$ is a hydrocarbyl group selected from (1) an alkyl or cycloalkyl group having from 1 to 18 carbon atoms, or (2) an aryl or aralkyl group having from 6 to 12 carbon atoms, and $R^{16}$ may optionally be substituted with at least one cyano or halo;

$R^{15}$ is a mono or polyvalent organic group having a valence of n and is the residue of a nucleophilic group-substituted compound, $(HX)_nR^{15}$, in which x is defined above, said residue having a molecular weight of up to about 20,000, $R^{15}$ being selected from (a) an aliphatic group having from 2 to 20 carbon atoms and an aryl group having up to 20 carbon atoms, these groups optionally having 1 to 4 catenary heteroatoms of oxygen, nitrogen, or sulfur, (b) polyoxyalkylene, (c) polyester, (d) polyolefin, (e) polyacrylate, and (f) polysiloxane, all optionally including at least one non-nucleophilic or nucleophilic group; and

n is an integer having a value of 2 to 20.

**21.** The overlay film of any preceding claim further characterized in that said protective layer further comprises at least one of the following additives: processing aid, ultraviolet stabilizer, antioxidant, flow agent, leveling agent, cure catalyst.

**22.** The overlay film of any preceding claim further characterized in that said polyol comprises limited amounts of one or more of the following: styrene, acrylic acid, or vinyl acetate.

**23.** The overlay film of claim 16 further characterized in that said protective layer comprises between about 0.5 and about 1.5 equivalents of said curing agent per equivalent of said polyol.

**24.** The overlay film of any preceding claim further characterized in at least one of the following:

a) said protective layer has a modulus at 2 percent elongation of at least 1400 megaPascals; or

b) said film has a transmittance of at least 80 percent to visible light.

**25.** The overlay film of any preceding claim further characterized in that said adhesive layer comprises at least one of the following:

a) a pressure-sensitive adhesive; or

b) an activated adhesive.

**26.** The overlay film of any preceding claim further characterized in that said film further comprises at least one of the following:

a) a forming carrier or a premask tape on said outer surface of said protective layer; or

b) a release liner covering said adhesive layer.

**27.** A retroreflective sheeting comprising a cover film and retroreflective elements disposed behind said cover film characterized in that said sheeting further comprises the overlay film of any preceding claim adhered to the cover film of said sheeting.

## Patentansprüche

**1.** Weitgehend transparente schützende Frontfolie,

dadurch gekennzeichnet, daß die Folie eine lösemittelbeständige, abriebfeste und wetterfeste Schutzschicht mit einer Innenseite und einer Außenseite umfaßt, sowie eine Klebstoffschicht auf der

Innenseite der Schutzschicht, wobei die Schutzschicht eine Zugfestigkeit bei 2 Prozent Dehnung von mindestens 1380 MPa hat und aus einer Mischung von mindestens einem hydroxyfunktionellen Acrylpolyol und mindestens einem polyfunktionellen Härtungsmittel gefertigt ist.

**2.** Frontfolie nach Anspruch 1, ferner dadurch gekennzeichnet, daß das Acrylpolyol hergestellt wird aus mindestens einem der folgenden:
(a) Methacrylsäureester,
(b) Acrylsäureester,
(c) hydroxyfunktionelles Acrylat oder Methacrylat, oder
(d) ein additionspolymerisierbares Monomer, enthaltend eine Gruppe, die chemisch in eine Hydroxyl-Gruppe umgewandelt werden kann.

**3.** Frontfolie nach einem der vorgenannten Ansprüche, ferner gekennzeichnet durch mindestens eines der folgenden:
(a) die effektive $T_g$ des Polyols liegt zwischen -20 ° und 30 °C; oder
(b) das effektive Äquivalentgewicht des Polyols liegt zwischen 300 und 6.000.

**4.** Frontfolie nach Anspruch 1 und 2, ferner gekennzeichnet durch mindestens eines der folgenden:
(a) die effektive $T_g$ des Polyols liegt zwischen -10 ° und 20 °C; oder
(b) das effektive Äquivalentgewicht des Polyols liegt zwischen 400 und 3.000.

**5.** Frontfolie nach Anspruch 1 bis 4, ferner dadurch gekennzeichnet, daß die Ausgangsmaterialien des Polyols mindestens eines der folgenden umfassen;
(a) mindestens zum Teil ein Acrylat mit mindestens vier Kohlenstoffatomen in der Ester-Gruppe; oder
(b) ein oder mehrere Vinyl-Monomere.

**6.** Frontfolie nach Anspruch 1 bis 5, ferner gekennzeichnet durch mindestens eines der folgenden:
(a) das polyfunktionelle Härtungsmittel umfaßt mindestens eines der folgenden: polyfunktionelles Isocyanat, Aminoplast-Harz, Azlacton oder eine Kombination davon;
(b) die effektive Funktionalität des Vernetzungsmittels liegt zwischen 2 und 4.

**7.** Frontfolie nach Anspruch 6, ferner dadurch gekennzeichnet, daß die Folie ein polyfunktionelles IsocyanatHärtungsmittel umfaßt, wobei das Härtungsmittel eines oder mehrere der folgenden aufweist; aliphatisches Diisocyanat, cycloaliphatisches Diisocyanat oder Triisocyanat.

**8.** Frontfolie nach Anspruch 6, ferner dadurch gekennzeichnet, daß die Folie ein polyfunktionelles Isocyanat umfaßt, worin ein Teil der Isocyanat-Funktionalitäten des Isocyanats Blockierungsgruppen oder Maskierungsgruppen aufweist.

**9.** Frontfolie nach Anspruch 8, ferner dadurch gekennzeichnet, daß die Folie Blockierungsgruppen von einem oder mehreren der folgenden Typen aufweist: Phenol, Lactam, aktives Methylen, Alkohol, Mercaptan, Säureamid, Imid, Amin, Imidazol, Harnstoff, Carbonat, Imin, Oxim oder Sulfit.

**10.** Frontfolie nach Anspruch 9, ferner dadurch gekennzeichnet, daß die Folie Blockierungsgruppen von einem oder mehreren der folgenden umfaßt: 2-Butanoxim, Acetoxim oder Diethylmalonat.

**11.** Frontfolie nach Anspruch 10, ferner dadurch gekennzeichnet, daß das Äquivalentverhältnis von Blockierungsmittel zu Isocyanat zwischen 0,7 und 1,5 liegt.

**12.** Frontfolie nach Anspruch 6, ferner dadurch gekennzeichnet, daß die Folie ein polyfunktionelles Isocyanat umfaßt, wobei das Isocyanat umgewandelt worden ist zu einem Biuret.

**13.** Frontfolie nach Anspruch 12, ferner dadurch gekennzeichnet, daß das Biuret das Biuret von 1,6-Hexamethylendiisocyanat ist.

**14.** Frontfolie nach Anspruch 13, ferner dadurch gekennzeichnet, daß das Äquivalentgewicht des Biuret, wenn es mit dem Polyol gemischt ist, kleiner ist als etwa 200.

**15.** Frontfolie nach Anspruch 6, ferner dadurch gekennzeichnet, daß das Härtungsmittel ein Isocyanat umfaßt, das zu Isocyanurat-Trimeren umgewandelt worden ist.

**16.** Frontfolie nach Anspruch 6 bis 15, ferner dadurch gekennzeichnet, daß die Schutzschicht 0,5...1,5 Äquivalente des Isocyanats pro 1,0 Äquivalent des Polyols umfaßt.

**17.** Frontfolie nach einem der vorgenannten Ansprüche, ferner dadurch gekennzeichnet, daß die Folie ein Härtungsmittel umfaßt, welches die Formel hat:

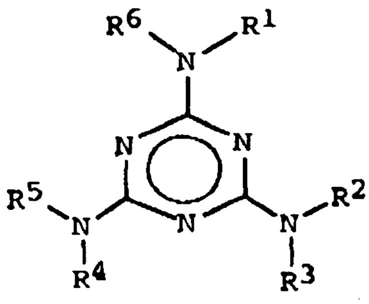

I

worin $R^1$...$R^6$ unabhängig Wasserstoff oder ein Radikal der Formel $-CH_2OP$ sind, worin P ein Wasserstoff oder ein Alkyl ist.

**18.** Frontfolie nach Anspruch 17, ferner dadurch gekennzeichnet, daß das Härtungsmittel partiell oder vollständig methyliert ist.

**19.** Frontfolie nach einem der vorgenannten Ansprüche, ferner dadurch gekennzeichnet, daß die Folie ein Härtungsmittel umfaßt, welches die Formel hat;

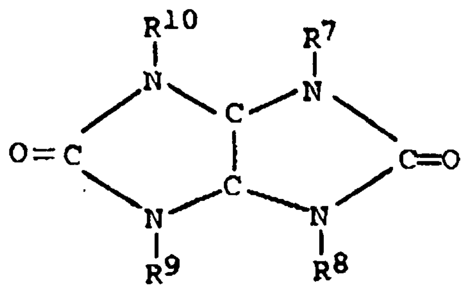

II

worin $R^7$...$R^{10}$ unabhängig Wasserstoff oder ein Radikal der Formel $-CH_2OP$ sind, worin P ein Wasserstoff oder ein Alkyl ist.

**20.** Frontfolie nach einem der vorgenannten Ansprüche, ferner dadurch gekennzeichnet, daß die Folie ein Härtungsmittel umfaßt, welches die Formel hat;

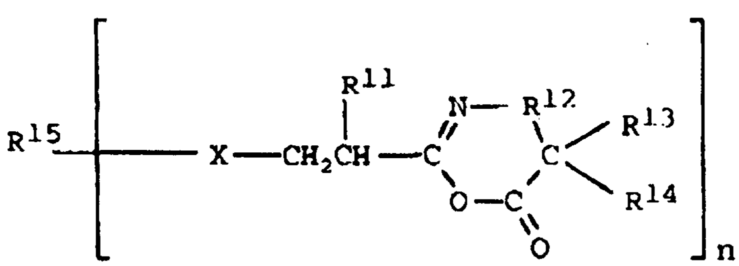

III

worin sind:

$R^{11}$ Wasserstoff, Chlor oder eine Methyl-Gruppe

$R^{12}$ eine Einfachbindung oder eine Methylen-Gruppe oder Ethylen-Gruppe, von denen die letzten beiden substituiert sein können durch Alkyl-Gruppen mit 1 bis 6 Kohlenstoffatomen oder Phenyl-Gruppen;

$R^{13}$ und $R^{14}$ unabhängig eine Alkyl-Gruppe mit 1 bis 12 Kohlenstoffatomen, eine Aryl-Gruppe oder Aralkyl-Gruppe mit 6 bis 12 Kohlenstoffatomen, oder $R^{13}$ und $R^{14}$ bilden zusammen genommen mit dem Kohlenetoffatom, an dem sie gebunden sind, einen 5- bis 12-gliedrigen carbocyclischen Ring;

X eine nucleophile Gruppe, ausgewählt aus

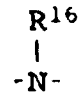

und -S-

worin $R^{16}$ eine Hydrocarbyl-Gruppe ist, ausgewählt aus (1) einer Alkyl-Gruppe oder Cycloalkyl-Gruppe mit 1 bis 18 Kohlenstoffatomen oder (2) einer Aryl- oder Aralkyl-Gruppe mit 6 bis 12 Kohlenstoffatomen, wobei $R^{16}$ wahlweise mit mindestens einem Cyano oder Halogen substituiert sein kann;

$R^{15}$ eine monovalente oder polyvalente organische Gruppe mit einer Valenz von n und ist der Rest einer mit einer nucleophilen Gruppe substituierten Verbindung, $(HX)_nR^{15}$, worin X wie vorstehend festgelegt ist und worin der Rest eine relative Molekülmasse von bis zu etwa 20.000 hat, $R^{15}$ ausgewählt wird aus (a) einer aliphatischen Gruppe mit 2 bis 20 Kohlenstoffatomen, und einer Arylgruppe mit bis zu 20 Kohlenstoffatomen; wobei diese Gruppen wahlweise 1 bis 4 verkettete Heteroatome von Sauerstoff, Stickstoff oder Schwefel aufweisen; (b) Polyoxyalkylen, (c) Polyester, (d) Polyolefin, (e) Polyacrylat und (f) Polysiloxan, die alle wahlweise mindestens eine nichtnucleophile oder nucleophile Gruppe einschließen; sowie

n eine ganze Zahl mit einem Wert von 2 bis 20.

**21.** Frontfolie nach einem der vorgenannten Ansprüche, ferner dadurch gekennzeichnet, daß die Schutzschicht ferner mindestens eines der folgenden Additive umfaßt: Verarbeitungshilfsmittel, Ultraviolettstabilisator, Antioxidans, Verlaufmittel, Einebnungsmittel, Härtungs-Katalysator.

**22.** Frontfolie nach einem der vorgenannten Ansprüche, ferner dadurch gekennzeichnet, daß das Polyol begrenzte Mengen von einem oder mehreren der folgenden aufweist: Styrol, Acrylsäure oder Vinylacetat.

**23.** Frontfolie nach Anspruch 16, ferner dadurch gekennzeichnet, daß die Schutzschicht zwischen etwa 0,5 und 1,5 Äquivalente des Härtungsmittels pro Äquivalent des Polyols aufweist.

**24.** Frontfolie nach einem der vorgenannten Ansprüche, gekennzeichnet durch mindestens eine der folgenden:

(a) die Schutzschicht hat eine Zugfestigkeit bei 2 Prozent Dehnung von mindestens 1.400 MPa; oder

(b) die Folie hat eine Durchlässigkeit für sichtbares Licht von mindestens 80 Prozent

**25.** Frontfolie nach einem der vorgenannten Ansprüche, ferner dadurch gekennzeichnet, daß die Klebstoffschicht mindestens einen der folgenden umfaßt:

(a) einen Haftklebstoff; oder

(b) einen aktivierten Klebstoff.

**26.** Frontfolie nach einem der vorgenannten Ansprüche, ferner dadurch gekennzeichnet, daß die Folie ferner mindestens einen der folgenden umfaßt:

(a) einen formgebenden Träger oder ein Pre-Abdeckband auf der äußeren Seite der Schutzschicht; oder

(b) einen Release-Liner, der die Klebstoffschicht bedeckt.

**27.** Retroreflektierendes Flächengebilde, umfassend eine Deckfolie und hinter der Deckfolie angeordnete retroreflektierende Elemente, dadurch gekennzeichnet, daß das Flächengebilde ferner die auf die Deckfolie des Flächengebildes aufgeklebte Frontfolie nach den vorgennanten Ansprüchen umfaßt.

## Revendications

**1.** Film protecteur de revêtement essentiellement transparent, caractérisé en ce qu'il comprend une couche protectrice résistante aux solvants, résistante à l'abrasion et résistante aux agents atmosphériques, ayant une surface interne et une surface externe, et une couche adhésive sur ladite surface interne de ladite couche protectrice, ladite couche protectrice ayant un module d'au moins 1 380 MPa à 2 % d'allongement et étant formée d'un mélange d'au moins un polyol acrylique à fonctionnalité hydroxy et au moins un agent polyfonctionnel de durcissement.

**2.** Film de revêtement selon la revendication 1, caractérisé, en outre, en ce que ledit polyol acrylique est formé d'au moins un des composés suivants :

a) ester de l'acide méthacrylique,
b) ester de l'acide acrylique,
c) acrylate ou méthacrylate à fonctionnalité hydroxy, ou
d) un monomère polymérisable par addition, contenant un groupe qui peut être transformé chimiquement en un groupe hydroxyle.

**3.** Film de revêtement selon l'une quelconque des revendications précédentes, caractérisé, en outre, par au moins l'une des particularités suivantes :

a) la $T_g$ efficace dudit polyol est comprise entre -20 ° C et -30 ° C ; ou
b) l'équivalent efficace en poids de polyol est compris entre 300 et 6 000.

**4.** Film de revêtement selon l'une des revendications 1 et 2, caractérisé, en outre, par au moins l'une des particularités suivantes :

a) la $T_g$ efficace dudit polyol est comprise entre -10 ° C et -20 ° C ; ou
b) le poids efficace de polyol est compris entre 400 et 3 000.

**5.** Film de revêtement selon l'une quelconque des revendications 1 à 4, caractérisé, en outre, en ce que les matériaux de départ dudit polyol comprennent au moins :

a) au moins en partie un acrylate ayant au moins quatre atomes de carbone dans le groupe ester ; ou
b) un ou plusieurs monomères vinyliques.

**6.** Film de revêtement selon l'une quelconque des revendications 1 à 5, caractérisé, en outre, par au moins l'une des particularités suivantes :

a) ledit agent polyfonctionnel de durcissement comprend au moins un des éléments suivants : isocyanate polyfonctionnel, résine aminoplaste, azlactone, ou une combinaison de ceux-ci ;
b) la fonctionnalité efficace dudit agent de durcissement est comprise entre 2 et 20 ; ou
c) la fonctionnalité efficace dudit agent de durcissement est comprise entre 2 et 4.

**7.** Film de revêtement selon la revendication 6, caractérisé, en outre, en ce qu'il comprend un agent de durcissement du type isocyanate polyfonctionnel, constitué par un ou plusieurs des éléments suivants : diisocyanate aliphatique, diisocyanate cycloaliphatique ou triisocyanate.

**8.** Film de revêtement selon la revendication 6, caractérisé, en outre, en ce qu'il comprend un isocyanate polyfonctionnel dans lequel une partie des fonctionnalités isocyanate dudit isocyanate ont des groupes de blocage ou des groupes de masquage.

**9.** Film de revêtement selon la revendication 8, caractérisé, en outre, en ce qu'il comprend des groupes de blocage d'un ou plusieurs types suivants : type phénol, type lactame, type méthylène actif, type alcool, type mercaptan, type amide d'acide, type imide, type amine, type imidazole, type urée, type carbonate, type imine, type oxyde ou type sulfite.

**10.** Film de revêtement selon la revendication 9, caractérisé, en outre, en ce que lesdits groupes de blocage comprennent un ou plusieurs des éléments suivants : 2-butanoxime, acétoxime ou malonate de diéthyle.

**11.** Film de revêtement selon la revendication 10, caractérisé, en outre, en ce que le rapport des équivalents d'agent de blocage aux équivalents d'isocyanate est compris entre 0,7 et 1,5.

**12.** Film de revêtement selon la revendication 6, caractérisé, en outre, en ce qu'il comprend un isocyanate polyfonctionnel qui a été transformé en un biuret.

**13.** Film de revêtement selon la revendication 12, caractérisé, en outre, en ce que ledit biuret est le biuret de 1,6-hexaméthylène-diisocyanate.

**14.** Film de revêtement selon la revendication 13, caractérisé, en outre, en ce que le poids d'équivalent dudit biuret mélangé avec ledit polyol est inférieur à environ 200.

**15.** Film de revêtement selon la revendication 6, caractérisé, en outre, en ce que ledit agent de durcissement comprend un isocyanate qui a été transformé en trimères d'isocyanurate.

**16.** Film de revêtement selon l'une quelconque des revendications 6 à 15, caractérisé, en outre, en ce que ladite couche protectrice comprend de 0,5 à 1,5 équivalent dudit isocyanate pour 1,0 équivalent dudit polyol.

**17.** Film de revêtement selon l'une quelconque des revendications précédentes, caractérisé, en outre, en ce qu'il comprend un agent de durcissement ayant la formule :

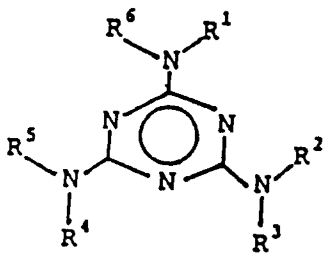

Formule I

où $R^1$-$R^6$ sont indépendamment un atome d'hydrogène ou un radical répondant à la formule $-CH_2OP$ où P est un atome d'hydrogène ou un groupe alkyle.

**18.** Film de revêtement selon la revendication 17, caractérisé, en outre, en ce que ledit agent de durcissement est partiellement ou complètement méthylé.

**19.** Film de revêtement selon l'une des revendications précédentes, caractérisé, en outre, en ce qu'il comprend un agent de durcissement ayant la formule :

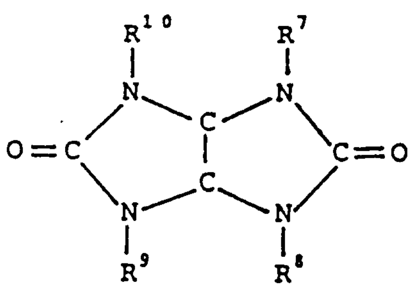

Formule II

ou $R^7$-$R^{10}$ sont indépendamment un atome d'hydrogène ou un radical répondant à la formule $-CH_2OP$ où P est un atome d'hydrogène ou un groupe alkyle.

**20.** Film de revêtement selon l'une quelconque des revendications précédentes, caractérisé, en outre, en ce qu'il comprend un agent de durcissement ayant la formule :

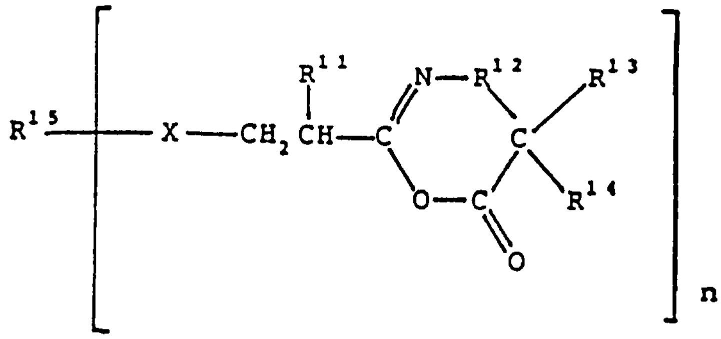

Formule III

où

$R^{11}$ est un atome d'hydrogène ou de chlore, ou un groupe méthyle ;

$R^{12}$ est une liaison simple ou un groupe méthylène ou éthylène, ces deux derniers pouvant être substitués par des groupes alkyles ayant de 1 à 6 atomes de carbone ou des groupes phényle ;

$R^{13}$ et $R^{14}$ sont indépendamment un groupe alkyle ou cycloalkyle ayant de 1 à 12 atomes de carbone, un groupe aryle ou aralkyle ayant de 6 à 12 atomes de carbone, ou $R^{13}$ et $R^{14}$, pris ensemble avec l'atome de carbone auquel ils sont liés, forment un noyau carbocyclique à 5 à 12 chaînons ;

X est un groupe nucléophile choisi parmi

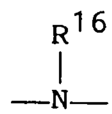

et -S-,

où $R^{16}$ est un groupe hydrocarbyle choisi parmi (1) un groupe alkyle ou cycloalkyle ayant de 1 à 18 atomes de carbone, ou (2) un groupe aryle ou aralkyle ayant de 6 à 12 atomes de carbone, et $R^{16}$ peut éventuellement être substitué par au moins un groupe cyano ou halogéno ;

$R^{15}$ est un groupe organique mono- ou polyvalent ayant une valence de n et est le résidu d'un composé substitué par un groupe nucléophile, $(HX)_nR^{15}$, où X est tel que défini ci-dessus, ledit résidu ayant un poids moléculaire allant jusqu'à environ 20 000, $R^{15}$ étant choisi parmi (a) un groupe aliphatique ayant de 2 à 20 atomes de carbone et un groupe aryle ayant jusqu'à 20 atomes de carbone, ces groupes ayant éventuellement de 1 à 4 hétéroatomes caténaires d'oxygène, d'azote ou de soufre, (b) un polyoxyalkylène, (c) un polyester, (d) une polyoléfine, (e) un polyacrylate et (f) un polysiloxane, tous ces composés comprenant éventuellement au moins un groupe nucléophile ou un groupe non nucléophile ; et

n est un nombre entier ayant une valeur de 2 à 20.

**21.** Film de revêtement selon l'une quelconque des revendications précédentes, caractérisé, en outre, en ce que ladite couche protectrice comprend, en outre, au moins un des additifs suivants : un auxiliaire de transformation, un agent de stabilisation à l'ultraviolet, un anti-oxydant, un agent d'écoulement, un agent d'égalisation et un catalyseur de durcissement.

**22.** Film de revêtement selon l'une quelconque des revendications précédentes, caractérisé, en outre, en ce que ledit polyol comprend des quantités limitées d'un ou plusieurs composés suivants : styrène, acide acrylique ou acétate de vinyle.

**23.** Film de revêtement selon la revendication 16, caractérisé, en outre, en ce que ladite couche protectrice comprend entre environ 0,5 et environ 1,5 équivalent dudit agent de durcissement par équivalent dudit polyol.

**24.** Film de revêtement selon l'une quelconque des revendications précédentes, caractérisé, en outre, par au moins l'une des particularités suivantes :

a) ladite couche protectrice a un module d'au moins 1 400 MPa à 2 % d'allongement ; ou

b) ledit film a un facteur de transmission de la lumière visible d'au moins 80 %.

**25.** Film de revêtement selon l'une quelconque des revendications précédentes, caractérisé, en outre, en ce que ladite couche adhésive comprend au moins un des éléments suivants :
a) un adhésif sensible à la pression ; ou
b) un adhésif active.

**26.** Film de revêtement selon l'une quelconque des revendications précédentes, caractérisé, en outre, en ce qu'il comprend aussi au moins un des éléments suivants :
a) un support de formage ou une bande de prémasquage sur ladite surface externe de ladite couche protectrice ; ou
b) un revêtement anti-adhésif recouvrant ladite couche adhésive.

**27.** Feuille réfléchissante comprenant un film de couverture et des éléments réfléchissants disposés à l'arrière dudit film de couverture, caractérisée en ce qu'elle comprend, en outre, le film de revêtement selon l'une quelconque des revendications précédentes, collé sur ledit film de couverture de ladite feuille.

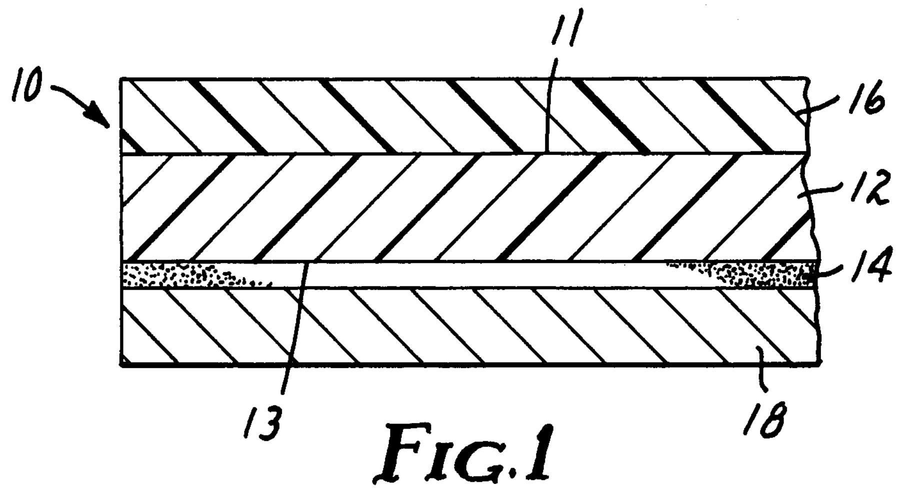


FIG.1

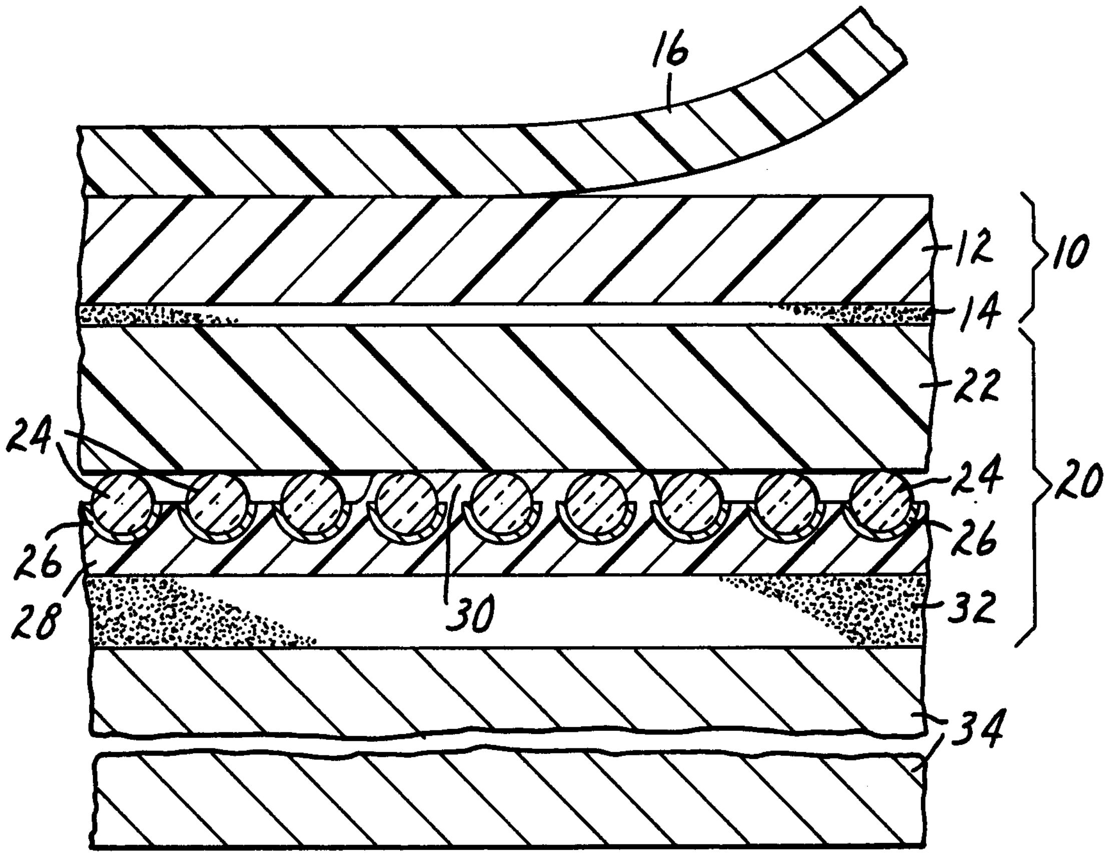


FIG.2